# EUROPEAN PATENT APPLICATION

(11) **EP 1 560 091 A2**
(43) Date of publication of application: **03.08.2005**
(21) Application number: 04256748.7
(22) Date of filing: 02.11.2004
(51) Int. Cl.: G05B 19/4065

(54) **Detecting breakages in machine tools and the like**

(30) Priority: 04.11.2003 GB 0325710
(71) Applicant: Collins, Stephen Richard, Wooth, Bridport DT6 5LE (GB)
(72) Inventor: Collins, Stephen Richard, Wooth, Bridport DT6 5LE (GB)
(74) Representative: Atkinson, Ralph

(57) **Abstract**

In a CNC lathe, a workpiece in the form of a longitudinally extending bar **12** is rotated about a longitudinal axis **14** and a cutter **16** is moved initially in the direction of arrow A and along a path, indicated in broken lines at **18**, to machine the bar **12.** The lathe runs unmanned, so any breakage of the cutter **16** results in scrap and possibly damage. To prevent this, a fixed sensor **20** is positioned, along the path **18**, at a point where the CNC system brings the cutter **16** to rest. The sensor **20** comprises a probe **24** connected to a microswitch **22** in turn connected to the start control of the lathe. The process cycle restarts only if the cutter **16** engages the probe **24** to indicate that it is not broken.

## Description

This invention concerns the detection of an object movable along a path to carry out a process on a workpiece, particularly but not exclusively for detecting cutter breakage in computer numerical control (CNC) machine tools intended to run unmanned.

Modern machine tools are very versatile. A CNC lathe, for instance, can be provided with a range of cutters programmed to engage a workpiece successively to produce a complex shape. This versatility has facilitated efficient production management methods such as zero-stock, just-in-time and kanban manufacturing. However these methods have in turn given rise to great variability in throughput. With demand for a particular machine varying by 200% or more, the provision of capacity to cover peak demand results in an unacceptable surplus when demand is low. Unmanned operation, where a machine tool runs automatically without a machinist present, has been introduced to deal with this.

Unmanned operation creates a further problem: there is no machinist present to change a cutter which breaks, which inevitably happens from time to time, especially with workpieces of materials such as high alloy steels which are difficult to machine. And as a result, if the machine tool is left unmanned for a long period such as overnight, a great deal of its output may be scrap and other damage may be caused by its continuing to run with a broken cutter.

To counter this, various proposals have been made to monitor the machine tool and stop it automatically if a cutter breaks. Most commonly in these prior proposals, an example of which is described in United States Patent US 5,342,275, some kind of sensor is intermittently moved to engage the cutter and stop the machine tool if it does not engage the cutter. The drawbacks in this approach are (a) the time required for the sensor to complete its monitoring cycle, which may be as long as 20s with some arrangements (which means 20s of lost production capacity for every tool monitored per cycle), (b) the need to set the sensor accurately, and possibly reset it every time a cutter is changed, and (c) at least for a CNC machine tool, the need to program the movement of the sensor if production versatility is not to be compromised. Other approaches include monitoring the machining load (as proposed in British Patent GB 2 244 610, for example) and monitoring machining vibration (as in United States Patent US 4,724,524). However each of these approaches requires, as well as customised setting, complex processing likely to be expensive.

It is an object of the present invention to provide a means of detecting cutter breakage which is simple, inexpensive and as versatile as the machine to which it is applied.

Thus according to the invention there is provided a control system for apparatus in which an object is movable along a path to carry out a process on a workpiece, the apparatus having start means and stop means, which control system comprises a fixed sensor engageable by the object at a position on said path where the object comes to rest and check means operatively associated with the sensor and arranged so that the object stays at its rest position unless the object engages the sensor thereat.

Preferably the stop means is actuated automatically to stop the apparatus when the object comes to its rest position and the check means then automatically actuates the start means only if the object has engaged the sensor. The start means and the stop means may each be manually operable.

The system preferably includes programming means whereby the path of the object may be set.

The system may include signal means operable automatically if the object has not engaged the sensor at the rest position.

The sensor may comprise a probe operatively connected to a switch.

For application to apparatus having a process cyclical over a set period, the system may include shut-down means operable to stop said apparatus automatically if said object does not engage the sensor after a time lapse longer than said period but shorter than two said periods The shut-down means may also be operable to stop the apparatus in response to a receipt of a fault signal from equipment associated with said apparatus. The system may include means for varying the time lapse and may also include means for alternatively enabling and disabling the shut-down means.

The invention is particularly applicable to apparatus being a machine tool wherein said object is a cutter thereof. In this application, in contrast to previous proposals in which a moving sensor is used for detecting cutter breakage, in the present invention the cutter (which is necessarily movable for machining) is brought to a *fixed* sensor. Those skilled in the science will appreciate that this arrangement, as well as saving the cost and complexity of moving the sensor, is particularly suitable in CNC or other programmable machine tools, because these allow the path of the cutter to be readily varied. Thus, within the parameters of a given machine, any cutter can be brought to the sensor, wherever positioned. In practice, of course, it is preferred to position the sensor so that the path of the cutter is as close as possible to its machining movement, whereby the time lost in checking the cutter is minimised. For machine tool application, the preferred arrangement is that the programming means (which may be computer numerical control) brings the cutter to a halt at said rest position and, if the cutter does not engage the sensor thereat, the check means does not operate the start means and the cutter remains at the rest position. It will be noted that the control system thus operate independently of the programming means and without requiring any modification of its program.

A machine tool embodying the invention may include a spindle operative to rotate the workpiece about a longitudinal axis, the path of the cutter having forward and rearward longitudinal end points. In such an arrangement the sensor is preferably located at the forward end point of the path of the cutter. The path of the cutter may lie substantially in a plane containing said longitudinal axis, with the sensor located laterally of said longitudinal axis and in said plane. The machine tool may include a turret for carrying said cutter and other cutters wherein the sensor is so located as to be clear of the turret and the other cutters (being in the same plane as the cutter in use).

The machine tool may be arranged for operation under a CNC system including a macro operative (a) to check the CNC programming relative to the sensor, (b) to provide information to an operator and (c) automatically to control movement of the cutter to the sensor. A macro is a programming subsystem that automates frequently used sequences, and those skilled in the science will appreciate that in the present invention it can provide automatic checking of the CNC programming format and information concerning safe usage of the control system, provide messages for operator information and guidance, and ensure that the relevant part of a cutter is automatically presented to the sensor without operator calculation or risk of collision - irrespective of the program work shift, tool offsets, tool length, tool type, tool projection or tool size.

The invention will now be described by way of example only with reference to the accompanying drawing, which illustrates the application of the invention to a computer numerical control lathe and in which -
*Figure 1* shows schematically a machined product with a profile produced by the lathe;
*Figure 2* shows schematically how the lathe used to produce the product of *Figure 1* may be arranged to detect cutter breakage;
*Figure 3* is a schematic illustration of the overall control system of the arrangement of *Figure 2;*
*Figures 4* and *5* illustrate a preferred position of a sensor in a lathe.

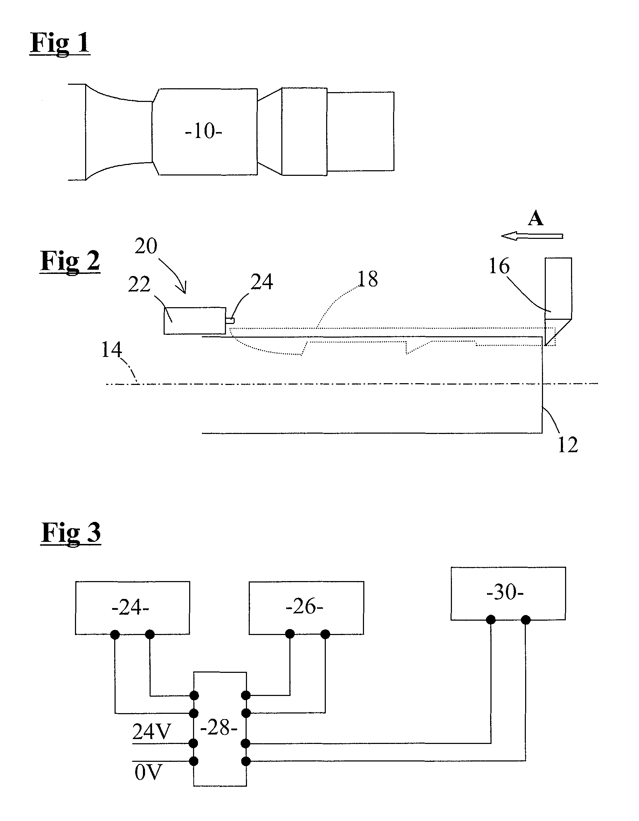

Referring first to *Figure 1*, this shows a product **10** with an external profile which may be produced by a lathe. In such a lathe, as shown in *Figure 2,* a longitudinally extending bar **12** is rotated about a longitudinal axis **14** (commonly called the Z axis) and a cutter **16** is moved along a path, indicated in broken lines at **18**, to machine the bar **12**. Thus, to machine the rotating bar **12**, the cutter **16** moves generally in the direction of arrow A as well as towards and away from the Z axis **14**.

The profile of the product **10** is simple, and other, more complex profiles may be produces by a lathe. However those skilled in the science will appreciate that even a simple profile may be difficult to produce with certain materials such as high alloy steel, which require large machining forces and creates swarf that tends to interfere with the machining process. With these materials, cutters like the cutter **16** are often broken.

Breakage of the cutter **16** is a particular problem if the machine tool is unmanned because, at the least, it means that bars **12** subsequently loaded into the tool (eg by an automatic bar feeder) do not receive the intended profile. And damage may be caused, for instance if the cutter breaks in mid-process and swarf is wrapped around the rotating bar **12**.

To detect cutter breakage, and stop the lathe if this occurs, a sensor **20** is positioned along the path **18** of the cutter **16**. The sensor **20** comprises a microswitch **22** operatively connected to a probe **24** extending across the path **18** of the cutter **16**. The lathe is programmed to bring the cutter **16** to rest at the position of the sensor **20**. If, but only if, the cutter **16** engages the probe **24** in this rest position, then the microswitch **22** closes to re-energise the drive to the cutter **16**, which then returns to its original position to begin another cycle.

It will be noted that the movement of the cutter **16** is not materially different from that required for the machining process, so the time lost in checking the cutter **16** is minimal. Tests show that checking a cutter by the arrangement of *Figure 2* can be done in as little as 2s, compared with perhaps 20s if a sensor has to be moved to the cutter. Also, the sensor **20** is fixed and the CNC system of the lathe itself is used to move the cutter **16** (to the sensor **20**) in the same way as it is moved for machining, so there is no need to modify or even interface with the CNC system.

It may be noted at this point that the microswitch **22** may be replaced by, for instance, a solid state proximity switch or possibly a camera or other means to generate a signal when the cutter **16** comes to the sensor **20.**

The control mechanism is illustrated in *Figure 3.* The sensor **20** is operatively connected to a cycle start button **26** by way of a programmable logic controller **28.** If the sensor **20** is not engaged by the cutter **16** *(Figure 2)* when this comes to its rest position, the start button **26** is not operated, and the lathe remains still. It will be noted that the circuitry is independent of the CNC system, and is separately powered from a 0-24V supply.

*Figure 3* also shows a shut-down control **30,** which is alternatively enabled and disabled (conveniently by means of a switch not shown readily accessible to an attendant). The shut-down **30** control is enabled when the machine tool is left unmanned for a prolonged period, eg overnight. When enabled, the shut-down control **30** stops the machine tool automatically if either (a) there is a lapse of time longer than a process cycle without the sensor **20** being engaged by the cutter **16** or (b) the shut-down control receives a fault signal from a bar feeder associated with the machine tool.

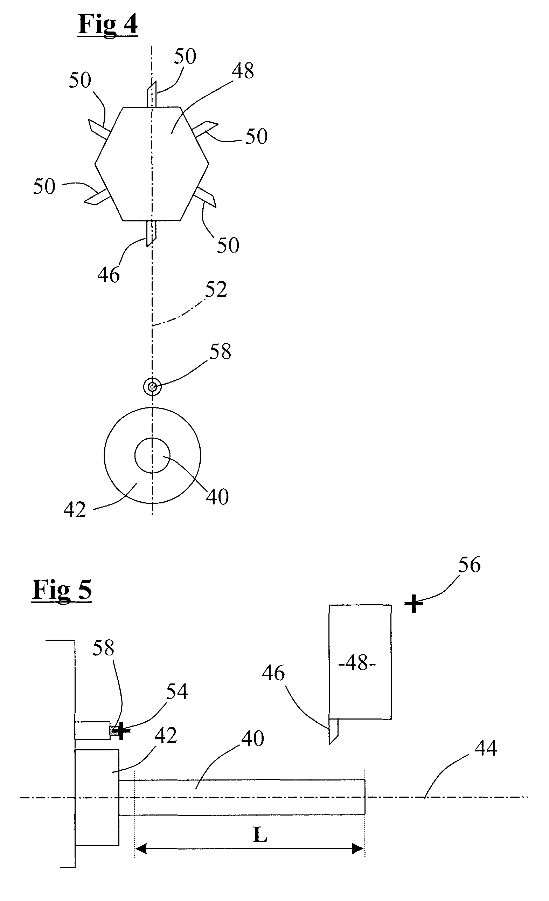

Referring now to *Figures 4* and *5,* these illustrate a preferred position of a sensor. *Figure 4* is a schematic end view of a lathe embodying the invention and *Figure 5* is a side view corresponding to *Figure 4.* The same reference numerals are used in both figures.

A workpiece **40** is mounted in a spindle **42** for rotation about the Z axis **44**. A cutter **46** is mounted in a turret **48** which also carries a number of other cutters **50**. As will be well known to those skilled in the science, the turret is operated under CNC to move the cutter **46** along a path in a plane **52** containing the Z axis **44** and the X axis of the lathe. This path has a forward end point **54** and a rearward end point **56** respectively marginally beyond the opposite longitudinal ends of the length L of the workpiece **40** to be machined. A sensor **58** is located at the forward end point of the path of the cutter **46**, laterally of the Z axis **44** (ie displaced from the Z axis along the X axis). The cutter **46** is detected by the sensor **58** at the forward endpoint of its path, but the turret **48** and the other tools **50** remain clear of the sensor **58.**

The lathe is operated under a CNC system including a macro which provides automatic checking of the CNC programming format and information concerning safe usage of the control system, provides messages for operator information and guidance, and ensures that the relevant part of the cutter **46** is automatically presented to the sensor **58** without operator calculation or risk of collision - irrespective of the program work shift, tool offsets, tool length, tool type, tool projection or tool size. As and when the turret **48** is turned for use of one of the other cutters **50**, this other cutter is likely to have a position in the plane **52** and/or a projection from the turret **48** different from that of the preceding cutter **46**, in which case the macro automatically repositions the new cutter **50** to be correctly positioned for engagement with the sensor **58**.

Those skilled in the science will appreciate that the sensor **58**, being in the same plane as the cutter **46**, is so located that none of the other cutters **50** on the turret **48** can collide with it. Further, irrespective of workpiece size, or the employment or otherwise of a tailstock, the position of the sensor **58** is such that it will correctly monitor any cutter **50** which is used.

The invention is not limited to lathes, or indeed to machine tools, and those skilled in the science will appreciate the benefits of the invention when applied to a wide range of automated equipment operated unmanned. Briefly summarised, these are improved performance (including evidence of adequate process control during unmanned operation), increased efficiency and avoidance of equipment damage.

## Claims

1. A control system for apparatus in which an object is movable along a path to carry out a process on a workpiece, the apparatus having start means and stop means, which control system comprises a fixed sensor engageable by the object at a position on said path where the object comes to rest and check means operatively associated with the sensor and arranged so that the object stays at its rest position unless the object engages the sensor thereat.

2. A control system as claimed in claim **1** wherein the stop means is actuated automatically to stop the apparatus when the object comes to its rest position and the check means then automatically actuates the start means only if the object has engaged the sensor.

3. A control system as claimed in claim **2** wherein the start means and the stop means are each manually operable.

4. A control system as claimed in any preceding claim including programming means whereby the path of the object may be set.

5. A control system as claimed in any preceding claim including signal means operable automatically if the object has not engaged the sensor at the rest position.

6. A control system as claimed in any preceding claim wherein the sensor comprises a probe operatively connected to a switch.

7. A control system as claimed in any preceding claim wherein said process is cyclical over a set period and the control system includes shut-down means operable to stop said apparatus automatically if said object does not engage the sensor after a time lapse longer than said period but shorter than two said periods

8. A control system as claimed in claim **7** wherein the shut-down means is operable to stop the apparatus in response to a receipt of a fault signal from equipment associated with said apparatus.

9. A control system as claimed in claim **7** or claim **8** including means for varying said time lapse.

10. A control system as claimed in any of claims **7** to **9** including means operable alternatively to enable and disable the shut-down means.

11. A control system substantially as hereinbefore described with reference to and as shown in the accompanying drawings.

12. A machine tool including a control system as claimed in any of claims **2** to **11** wherein said object is a cutter thereof.

13. A machine tool as claimed in claim **12** wherein said programming means brings the cutter to a halt at said rest position and, if the cutter does not engage the sensor thereat, the check means does not operate the start means and the cutter remains at the rest position.

14. A machine tool control system as claimed in claim **13** wherein the programming means comprises computer numerical control.

15. A machine tool as claimed in any of claims **12** to **14** including a spindle operative to rotate the workpiece about a longitudinal axis and wherein the path of the cutter has forward and rearward longitudinal end points.

16. A machine tool as claimed in claim **15** wherein said sensor is located at the forward end point of the path of the cutter.

17. A machine tool as claimed in claim **16** wherein the path of the cutter lies substantially in a plane containing said longitudinal axis and the sensor is located laterally of said longitudinal axis and in said plane.

18. A machine tool as claimed in claim **17** including a turret for carrying said cutter and other cutters and wherein the sensor is so located as to be clear of the turret and the other cutters.

19. A machine tool as claimed in any of claims **12** to **18**, which machine tool is arranged for operation under a CNC system including a macro operative (a) to check the CNC programming relative to the sensor, (b) to provide information to an operator and (c) automatically to control movement of the cutter to the sensor.

20. A machine tool as claimed in claim **19** wherein the macro is operative automatically to position each of a plurality of cutters mounted on the turret for respective engagement with the sensor.

21. A machine tool substantially as hereinbefore described with reference to and as shown in the accompanying drawings.
